# EUROPEAN PATENT APPLICATION

(11) **EP 2 040 274 A1**
(43) Date of publication of application: **25.03.2009**
(21) Application number: 07790613.9
(22) Date of filing: 11.07.2007
(51) Int. Cl.: H01H 3/08, B60R 16/02, H01H 19/14

(54) **SWITCH FOR VEHICLE**

(30) Priority: 12.07.2006 JP 2006192014
(71) Applicant: Sumitomo Wiring Systems, Ltd., Yokkaichi-shi, Mie 510-8503 (JP)
(72) Inventor: OONISHI, Yasushi, Yokkaichi-shi, Mie 510-8503 (JP); NAKAGAKI, Satoshi, Yokkaichi-shi, Mie 510-8503 (JP)
(74) Representative: Müller-Boré & Partner Patentanwälte
(86) International application number: PCT/JP2007/063809
(87) International publication number: WO 2008/007695

(57) **Abstract**

An object of the present invention is to provide a vehicle switch capable of reliably exhibiting an impact absorbing function in the event of a vehicle crash or the like by a simple construction. A vehicle switch 1 installed on a vehicle panel 100 to accomplish the above object includes a switch element 10, a base 20, a holder 40 covering the base 20 and the switch element 10 and operating together with the switch element 10, and an operation knob 50 supported by the holder 40 and operating together with the holder 40. The holder 40 includes an inner part 41 connected with the switch element 10 and held in contact with the base 20, an outer part 42 provided around the inner part 41 and connected with the operation knob 50 and a breakable part 43 connecting the inner part 41 and the outer part 42. The breakable part 43 is so shaped as to be broken by a shear force acting between a part of the inner part 41 held in contact with the base 20 and the outer part 42 of the holder 40 when a pressing load of a specified value or higher is exerted to the operation knob 50.

## Description

### FIELD OF TECHNOLOGY

The present invention relates to a vehicle switch which is provided on a vehicle panel and whose part projecting toward a front side of the vehicle panel can move backward in a direction toward a back side of the vehicle panel when a specified pressing load is exerted to the vehicle switch.

### BACKGROUND ART

Many vehicle mounted devices such as an air-conditioner and an audio device are generally mounted in a vehicle such as an automobile. Many vehicle switches used to operate the above vehicle mounted devices are provided on a vehicle panel such as an instrument panel. Some of the vehicle switches partly project toward a front side of the vehicle panel from the aspect of operability. For the vehicle switches projecting toward the front side of the vehicle panel, those designed to alleviate an impact by backward movements of the projecting parts even if a passenger touches the projecting parts of the vehicle switches in the event of a vehicle crash or the like have been developed. Specifically, there are vehicle switches whose projecting parts can move backward in a direction toward the back side of the vehicle panel when a pressing load of a specified value or higher is exerted to the vehicle switches.

As the above vehicle switch, a rotary switch provided on an instrument panel and including an operation knob, a switch element and a resilient rib is disclosed, for example, in patent document 1. Specifically, the switch element is provided on a back side of the instrument panel. On the other hand, the operation knob projects toward a front side of the instrument panel while being supported by the resilient rib.
The resilient rib is formed with a cutout and shaped to be squeezed toward the back side of the instrument panel by exerting a pressing load of a specified value or larger to the operation knob. In this rotary switch, when the resilient rib is squeezed, the operation knob supported by this resilient rib moves toward the back side of the instrument panel.

A rotary switch using a spring member instead of the resilient rib is also disclosed in patent document 1. Specifically, this spring member is a leaf spring projecting outward from the switch element and is displaceable toward the back side of the instrument panel according to a pressing load to be exerted from the front side. The operation knob is mounted at a front side of this spring member. Accordingly, in the rotary switch using this spring member, the operation knob slides down from the spring member when the pressing load of the specified value or larger is exerted to the operation knob to increase a displacement amount of the spring member.

The conventional vehicle switches as described above may not sufficiently move toward the back side of the instrument panel even if a pressing load of a specified value or higher is exerted.

For example, in the rotary switch including the resilient rib, if the pressing load is exerted in an oblique direction different from a squeezing direction of the resilient rib, this resilient rib may not be sufficiently squeezed.

Further, in the rotary switch including the spring member, unless the pressing load is so exerted as to move the spring member toward the back side of the instrument panel, the operation knob may not be able to successfully move backward in the direction toward the back side of the instrument panel. The rotary switch including the spring member also has a problem that the position of the operation knob is displaced in the pressing direction thereof according to the pressing load exerted to the operation knob. In other words, the position of the operation knob may be changed even by an operation force given during a normal switch operation, thereby worsening operability.
Patent Document 1:
   Japanese Unexamined Patent Publication No. 2001-189116

### DISCLOSURE OF THE INVENTION

Accordingly, an object of the present invention is to provide a vehicle switch capable of reliably exhibiting an impact absorbing function in the event of a vehicle crash or the like while ensuring operability by a simple construction.

In order to accomplish this object, the present invention is directed to a vehicle switch installed on a circuit board provided at a back side of a vehicle panel mounted in a vehicle, comprising a switch element provided on the circuit board and projecting toward a front side of the vehicle panel, a base provided on the circuit board and surrounding the switch element, a holder covering the base and the switch element from the front side of the vehicle panel and connected with the switch element to operate together with the switch element and an operation knob supported at the front side of the holder and operating together with the holder by being connected with the holder,
wherein the holder includes an inner part connected with the switch element and held in contact with the base, an outer part provided around the inner part and connected with the operation knob and a breakable part provided between the inner part and the outer part to connect the inner part and the outer part, the breakable part is so shaped as to be broken by a shear force acting between a part of the inner part in contact with the base and the outer part of the holder when a pressing load of a specified value or higher is exerted to the operation knob, and the operation knob connected with the outer part of the holder moves backward in a direction toward the back side of the vehicle panel when the breakable part is broken.

According to such a vehicle switch, even if a pressing load is exerted to the vehicle switch in an oblique direction, this pressing load can act as a shear force on the breakable part. This enables the breakable part to be more reliably broken and enables the outer part of the holder and the operation knob to more reliably move backward toward the back side of the vehicle panel as a result of the breakage of the breakable part, whereby an impact on a passenger in the event of a vehicle crash or the like can be alleviated.

### BRIEF DESCRIPTION OF THE DRAWINGS

FIG. 1 is a perspective view showing a mounted state of vehicle switches according to the invention,
FIG. 2 is a side view of the vehicle switch according to the invention,
FIG. 3 is an exploded perspective view of the vehicle switch according to the invention from front side,
FIG. 4 is an exploded perspective view of the vehicle switch according to the invention from rear side,
FIG. 5 is a perspective view of a holder for the vehicle switch according to the invention,

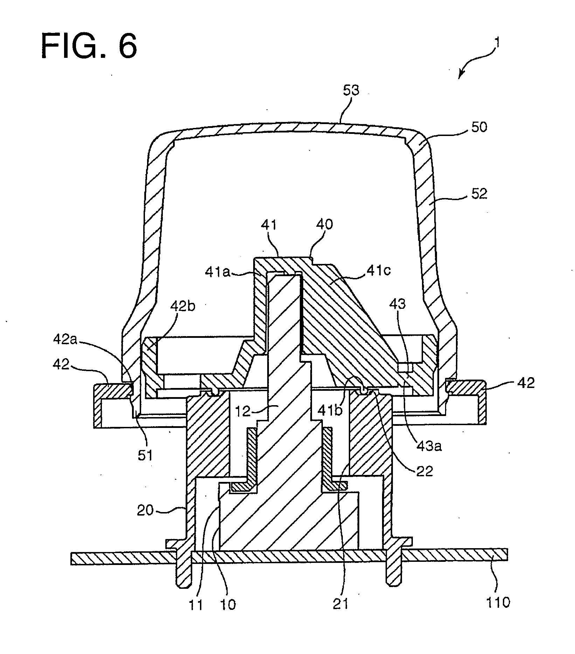

FIG. 6 is a section of the vehicle switch according to the invention,
FIG. 7 is a perspective view when a breakable part of the vehicle switch according to invention is broken, and
FIG. 8 is a section when the breakable part of the vehicle switch according to invention is broken.

### BEST MODES FOR EMBODYING THE INVENTION

A preferable embodiment of the present invention is described with reference to the drawings. Here is described a rotary switch provided on an instrument panel as an example of a vehicle switch according to the present invention.

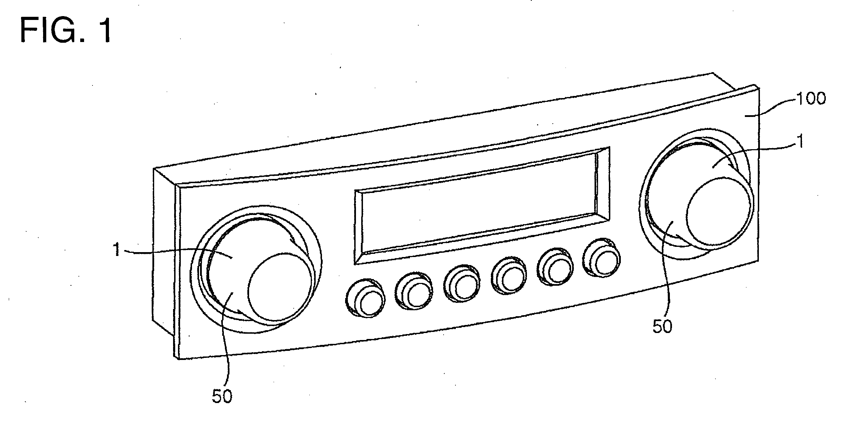

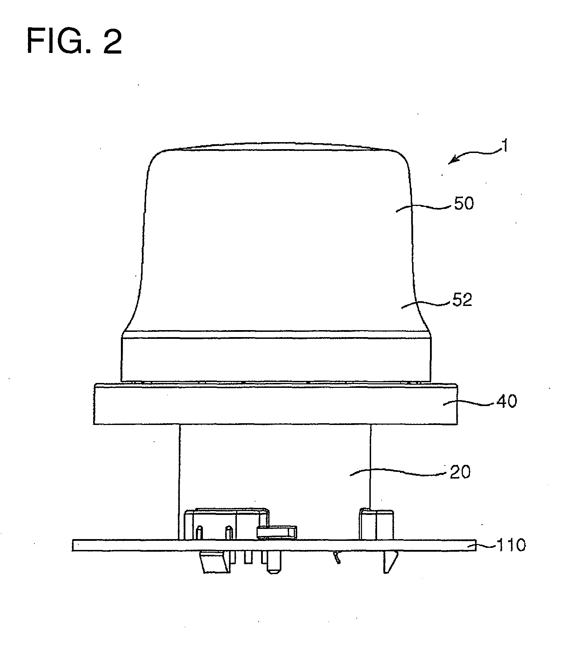

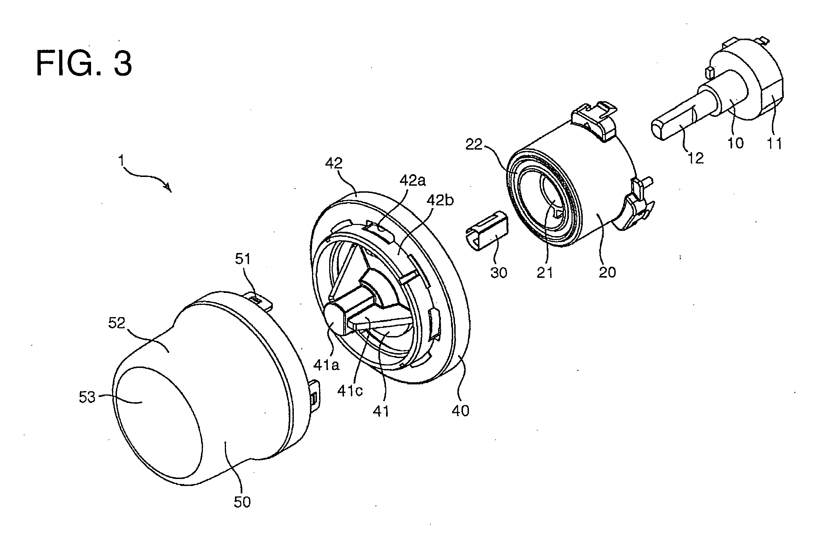

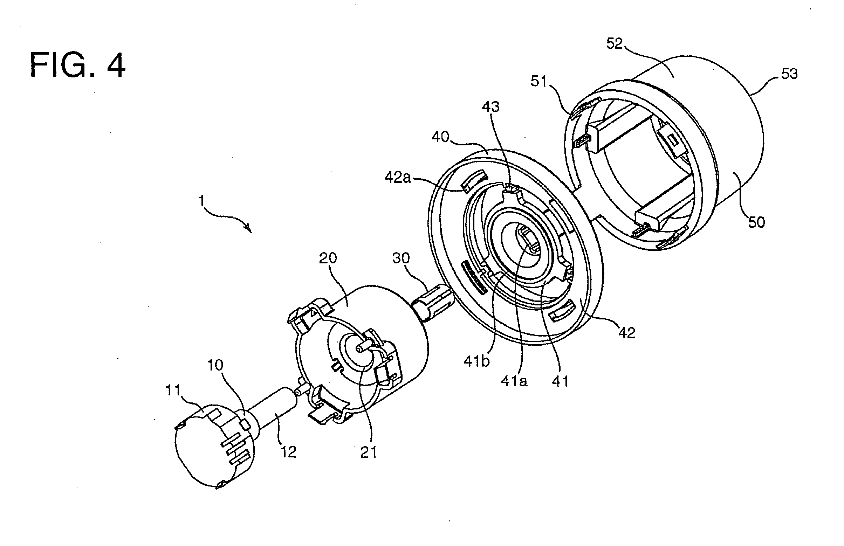

FIG. 1 is a schematic perspective view showing an exemplary state where vehicle switches 1 (hereinafter, merely "switches 1") according to this embodiment are mounted on an instrument panel (vehicle panel) 100. As shown in FIG. 1, each switch 1 is mounted such that a part of an operation knob 50 to be described later projects toward a front side from the instrument panel 100 so as to facilitate the operation of the operation knob. FIG. 2 is a section of the switch 1 and FIGS. 3 and 4 are exploded perspective views of the switch 1.

The switch 1 is a rotary switch including a switch element 10, a base 20, a D-spring 30, a holder 40 and the operation knob 50. This switch 1 is provided on a circuit board 110. The circuit board 110 is a printed circuit board fixed to the back side of the instrument panel 100 and the switch element 10 and the base 20 are fixed onto this circuit board 110.

The switch element 10 is a rotary switch element. This switch element 10 is so fixed to the circuit board 110 as to project toward the front side of the instrument panel 100 from the circuit board 110. The switch element 10 includes a main portion 11 fixed to the circuit board 110 and an operating portion 12. The operating portion 12 is rotatable relative to the main portion 11 about an axis in a normal direction of the circuit board 110. The switch 1 changes its output by the rotation of this operating portion 12.

The base 20 is a tubular part and so fixed to the circuit board 110 as to surround the switch element 10. An insertion hole 21, into which the switch element 10 is insertable, is formed in a central part of this base 20. A guiding groove 22 (guiding portion) is formed in the front surface of the base 20 along the outer periphery.

The D-spring 30 is a leaf spring and mounted on the leading end of the operating portion 12 of the switch element 10. This D-spring 30 is for increasing a connection force of the operating portion 12 and the holder 40.

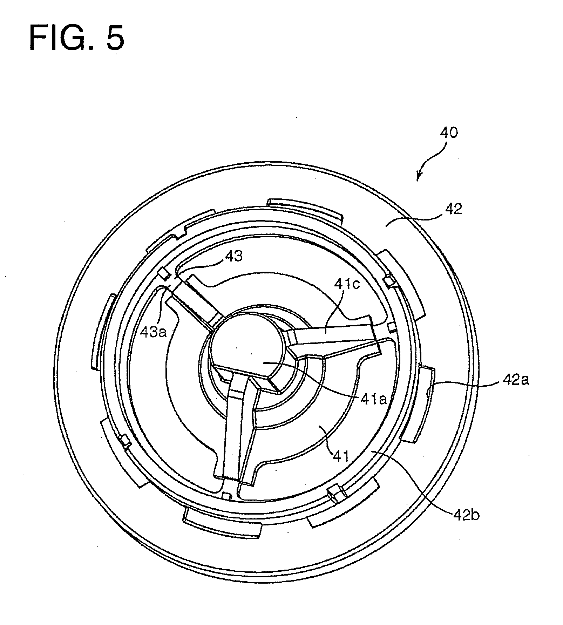

The holder 40 is so shaped as to cover the switch element 10 and the base 20 from the front side. As shown in FIG. 5, the holder 40 includes an inner part 41, an outer part 42 and a breakable part 43. The inner part 41 is connected with the switch element 10 and in contact with the base 20. The outer part 42 is provided around the inner part 41. The breakable part 43 connects the inner part 41 and the outer part 42. These inner part 41, outer part 42 and breakable part 43 are all integrally formed.

The inner part 41 includes, near its center, a tubular fitting portion 41 a projecting toward the front side. This fitting portion 41 a is shaped such that the operating portion 12 of the switch element 10 is insertable thereinto, and connected with the operating portion 12 via the D-spring 30. By this connection, the operating portion 12 of the switch element 10 and the entire holder 40 are connected to rotate together.

A slidable projection 41 b engageable with the guiding groove 22 of the base 20 is provided over the entire circumference on the back surface of the inner part 41. This slidable projection 41 b is so shaped as to be slidable in a rotating direction on the guiding groove 22. By this sliding movement of the slidable projection 41 b on the guiding groove 22, the holder 40 and the switch element 10 can easily rotate about their axes. The inner part 41 also includes accessory plates 41 c extending from the fitting portion 41 a toward connecting portions 43a of the breakable part 43. These accessory plates 41 c have a substantially triangular shape and increase the rigidity of the inner part 41.

As shown in FIG. 5, the breakable part 43 includes a plurality of connecting portions 43a arranged at specified intervals in a circumferential direction thereof. These connecting portions 43a are in the form of thin ribs extending from one ends of the accessory plates 41 c toward the outer part 42 of the holder 40. In other words, these connecting portions 43a are shaped to be more easily breakable in a shear direction than the inner part 41 and the outer part 42 of the holder 40. Here, in this embodiment, three connecting portions 43a are arranged at regular intervals to improve the stability of the holder 40 as shown in FIG. 5. The inner part 41 and the outer part 42 of the holder 40 are connected only by these connecting portions 43a.

The outer part 42 is for supporting the operation knob 50. This outer part 42 is formed with a plurality of locking holes 42a for locking the operation knob 50. These locking holes 42a are arranged at circumferentially spaced apart positions. A standing wall portion 42b projecting toward the front side over the entire circumference is provided between these locking holes 42a and the breakable part 43. This standing wall portion 42b is designed to increase the rigidity of the outer part 42 and to facilitate the mounting of the operation knob 50. In other words, the operation knob 50 can be easily mounted along this standing wall portion 42b.

The operation knob 50 includes an outer wall 52 and a lid portion 53. The outer wall 52 is so shaped as to surround the inner part 41, the breakable part 43 and the like of the holder 40 from the outer side. This holder 40 is mounted on the front surface of the outer part 42. Specifically, this outer wall 52 includes locking projections 51 engageable with the locking holes 42a of the outer part 42 of the holder 40 at positions corresponding to the locking holes 42a. This outer wall 52, consequently the operation knob 50 is fixed to the holder 40 by the engagement of the locking holes 42a and the locking projections 51. By this engagement, the operation knob 50 and the holder 40 are rotatable together.

As described above, the operation knob 50 is interlocked with the outer part 42 of the holder 40 and the outer part 42 of the holder 40 is connected with the inner part 41 of the holder 40 by the breakable part 43. The inner part 41 of the holder 40 is connected with the operating portion 12 of the switch element 10. Thus, if the operation knob 50 is rotated, the operating portion 12 of the switch element 10 is rotated together with the operation knob 50.

Here, in this embodiment, the guiding groove 22 is formed in the base 20 and the slidable projection 41 b engageable with this guiding groove 22 is provided on the inner part 41 of the holder 40. Accordingly, the operation knob 50 is stably rotated by a sliding movement of this slidable projection 41 b on the guiding groove 22.

Next, the action of this switch 1 when a pressing load is exerted to the operation knob 50 from the front side is described.

The operation knob 50 is interlocked with the outer part 42 of the holder 40 to be supported thereby. This outer part 42 is formed integral to the breakable part 43 and the inner part 41. Accordingly, when a pressing load is exerted to the operation knob 50, it acts on the entire holder 40 via the outer part 42. On the other hand, the inner part 41 is supported by the base 20 from the back side by the engagement of the slidable projection 41 b and the guiding groove 22 of the base 20. Thus, when a pressing load is exerted to the holder 40, it acts as a shear force between the inner part 41 and the outer part 42.

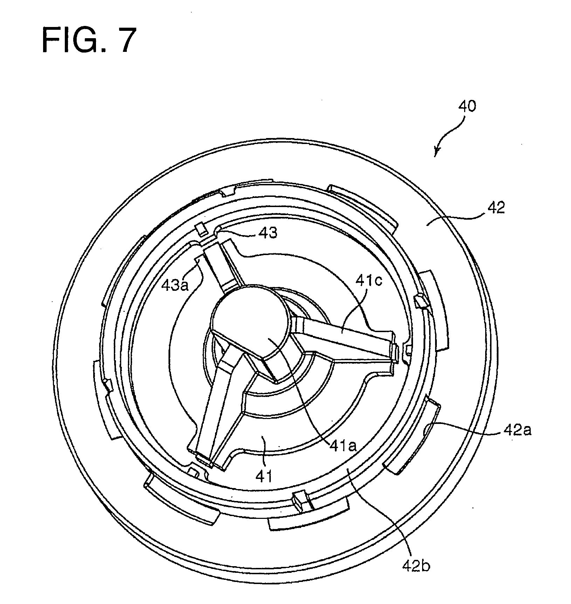

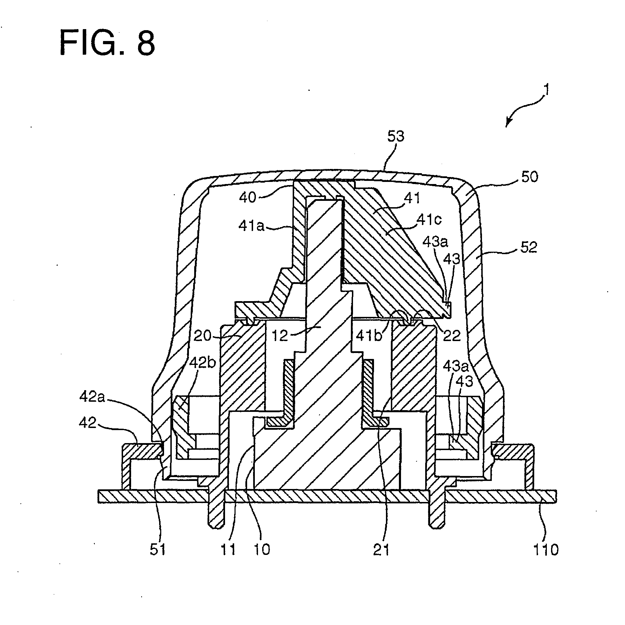

As described above, the breakable part 43 is provided between the inner part 41 and outer part 42 of the holder 40. This breakable part 43 is set to have a smaller rigidity than the inner part 41 and the outer part 42 as described above. Accordingly, if a pressing load of a specified value or higher is exerted to the operation knob 50 and the shear force acting between the inner part 41 and the outer part 42 becomes a specified level or higher, the breakable part 43 is broken as shown in FIG. 7. If this breakable part 43 is broken, the outer part 42 connected to the inner part 41 by the breakable part 43 is no longer supported as shown in FIG. 8 and, hence, moves backward from the inner part 41 toward the back side of the instrument panel 100. Since the operation knob 50 interlocked with this outer part 42 similarly moves toward the back side of the instrument panel 100, the projecting amount of the switch 1 from the instrument panel 100 decreases. Specifically, the outer part 42 of the holder 40 and the operation knob 50 move backward until either one of the outer part 42 and the operation knob 50 comes into contact with the circuit board 110 or the operation knob 50 comes into contact with the holder 40.

Here, backward movement amounts of the outer part 42 of the holder 40 and the like may be appropriately set by adjusting the size of the operation knob 50 or the like according to the projecting amount of the operation knob 50 from the instrument panel 100. In this embodiment, a distance from the circuit board 110 to the leading end of the holder 40 and a distance from the back end surface of the outer part 42 to the leading end of the operation knob 50 are set substantially equal, and the diameter of the outer wall 52 of the operation knob 50 is set larger than that of the inner part 41 of the holder 40. Thus, the operation knob 50 moves backward while accommodating the inner part 41 of the holder 40, the base 20 and the switch element 10 into the interior of the outer wall 52. More specifically, this operation knob 50 moves in a direction toward the back side of the instrument panel 100 until the lid portion 53 thereof comes into contact with the inner part 41 of the holder 40 and the back end surface of the outer part 42 of the holder 40 comes into contact with the circuit board 110.

In this switch 1, the operation knob 50 and the outer part 42 of the holder 40 are connected and a pressing load exerted to the operation knob 50 is reliably transmitted to the outer part 42. Further, a shear force created by this pressing load reliably acts on the breakable part 43. Thus, even if the pressing load is exerted in an oblique direction, the breakable part 43 can be broken and the projecting amount of the switch 1 from the instrument panel 100 decreases.

As described above, in this switch 1, the inner part 41 of the holder 40 is supported by the base 20 from the back side, the outer part 42 of the holder 40 and the operation knob 50 are connected and the inner part 41 and the outer part 42 of the holder 40 are connected by the breakable part 43. Thus, even if a pressing load is exerted in an oblique direction to the switch 1, this pressing load can act as a shear force on the breakable part 43. This enables the breakable part 43 to be reliably broken and enables the outer part 42 and the operation knob 50 to reliably move toward the back side of the instrument panel 100 as a result of the breakage of the breakable part 43. In other words, according to this switch 1, if an impact load is exerted to the switch 1 in the event of a vehicle crash or the like, the projecting amount of the switch 1 from the instrument panel 100 can be reliably decreased, thereby being able to reliably suppress the injury of a passenger or the like.

If the inner part 42, the outer part 42 and the breakable part 43 of the holder 40 are integrally formed as described above, the pressing load can act on the entire holder 40 and the shape of the breakable part 43 can be easily designed. In other words, if the inner part 41 and the like are integrally formed, the rigidity of the breakable part 43 can be decreased only by thinning the breakable part 43. In addition, the number of parts is reduced, which is advantageous in terms of cost and facilitates the assembling of the switch 1.

If the thickness of the connecting portions 43a of the breakable part 43 is set smaller than those of the inner part 41 and the outer part 42 of the holder 40 as described above, the cross-sectional area, consequently the rigidity of the breakable part 43 is reduced to facilitate the breakage of the breakable part 43. Further, by constituting the breakable part 43 by a plurality of connecting portions 43 circumferentially arranged at specified intervals and connecting the inner part 41 and the outer part 42 of the holder 40 only by these connecting portions 43a, the breakage of the breakable part 43 is made easier.

Further, if the accessory plates 41 a are provided on the inner part 41 of the holder 40 and the standing wall portion 42b is provided on the outer part 42 as described above, the rigidities of the inner part 41 and the outer part 42 are increased, making the rigidity of the breakable part 43 relatively smaller and making the breakable part 43 easily breakable.

Since the back side of the inner part 41 of the holder 40 is supported on the base 20, the breakable part 43 can be broken while an excessive displacement of the outer part 42 of the holder 40 toward the back side of the instrument panel 100 is prevented. This suppresses the deterioration of the operability of the switch 1 resulting from displacements of the operation knob 50 and the outer part 42 of the holder 40.

If the base 20 is formed with the guiding groove 22 for guiding the holder 40 in the rotating direction by a sliding movement of the slidable projection 41 b of the inner part 41 of the holder 40, the rotating operations of the holder 40 and the operation knob 50 are stabilized to improve the operability of the operation knob 50.

If the operation knob 50 and the outer part 42 of the holder 40 are formed to be movable backward toward the circuit board 110 as described above, it is not necessary to ensure a space anew for decreasing the projecting amount of the switch 1, which is advantageous in saving space.

Although the switch 1 is shown as a rotary switch in this embodiment, it may be a push switch or the like without being limited to this.

Although the guiding groove 22 of the base 20 and the slidable projection 41 b of the inner part 41 of the holder 40 are engaged so that the base 20 and the inner part 41 of the holder 40 are constantly in contact in the above embodiment, they may come into contact only when a pressing load is exerted.

The breakable part 43 may have any shape provided that it is easily breakable as described above. For example, a thin plate member may be provided over the entire circumference. Further, the positions and number of the connecting portions 43a of the breakable part 43 can be appropriately set.

As described above, the present invention is directed to a vehicle switch installed on a circuit board provided at a back side of a vehicle panel mounted in a vehicle, comprising a switch element provided on the circuit board and projecting toward a front side of the vehicle panel, a base provided on the circuit board and surrounding the switch element, a holder covering the base and the switch element from the front side of the vehicle panel and connected with the switch element to operate together with the switch element and an operation knob supported at the front side of the holder and operating together with the holder by being connected with the holder, wherein the holder includes an inner part connected with the switch element and held in contact with the base, an outer part provided around the inner part and connected with the operation knob and a breakable part provided between the inner part and the outer part to connect the inner part and the outer part, the breakable part is so shaped as to be broken by a shear force acting between a part of the inner part in contact with the base and the outer part of the holder when a pressing load of a specified value or higher is exerted to the operation knob, and the operation knob connected with the outer part of the holder moves backward in a direction toward the back side of the vehicle panel when the breakable part is broken.

According to this vehicle switch, the breakable part is broken when a pressing load is exerted to the operation knob, whereby the holder and the operation knob can move toward the back side of the vehicle panel. These movements of the holder and the operation knob can suppress the injury of a passenger by this operation knob.

Specifically, in the above vehicle switch, the outer part of the holder is connected with the operation knob at the front side of the vehicle switch, whereas the inner part of the holder is connected with the switch element and held in contact with the base at the back side of the vehicle switch. Accordingly, if a pressing load is exerted to the operation knob, a shear force acts on the breakable part provided between the outer part and the inner part of the holder. Here, the operation knob and the outer part of the holder are connected to the inner part of the holder via the breakable part. Thus, If the pressing load increases to a specified value or higher and the breakable part is broken by the shear force, the operation knob and the outer part of the holder move from the inner part of the holder toward the back side of the vehicle panel.

Particularly, according to this vehicle switch, the support of the inner part of the holder by the base and the pressing load exerted from the operation knob to the outer part of the holder cause a shear force to more reliably act on the breakable part. This promotes the breakage of the breakable part and more reliably moves a projecting part of the switch even if a pressing load is exerted in an oblique direction unlike in the conventional case of utilizing the displacement of the resilient rib or the spring member disclosed in Japanese Unexamined Patent Publication No. 2001-189116.

Further, in this vehicle switch, the back side of the inner part of the holder is held in contact with the base and the shear force acts on the breakable part with this contact part as a supporting point. This realizes the breakage of the breakable part while preventing the outer part of the holder and the operation knob connected therewith from being excessively displaced toward the back side of the vehicle panel. This consequently suppresses the deterioration of the operability of the switch resulting from the displacement of the operation knob.

Since the operation knob and the outer part of the holder move backward in the direction toward the back side of the vehicle panel in this vehicle switch, it is not necessary to ensure a space anew for moving this vehicle switch backward, which is advantageous in spacing saving.

In the present invention, it is preferable to integrally form all of the outer part, the inner part and the breakable part of the holder. Such a construction enables a cost reduction by decreasing the number of parts and facilities the assembling of the vehicle switch.

The breakable part is preferably shaped to be thinner than the inner part and the outer part of the holder. It is preferable that the breakable part includes a plurality of connecting portions circumferentially arranged at specified intervals and that the outer part and the inner part of the holder are connected only by these connecting portions. Such a construction enables a reduction in the cross-sectional area of the breakable part and makes the breakable part easily breakable.

The vehicle switch of the present invention can be used as a rotary switch, in which the switch element includes a main portion fixed to the circuit board and an operating portion rotatable relative to the main portion about an axis in a normal direction of the circuit board, the inner part of the holder is connected with the operating portion, and the inner part and the outer part of the holder and the operating portion are rotated together as the operation knob is rotated.

Specifically, according to the above vehicle switch, the inner part of the holder connected with the operation knob and the inner part of the holder connected with the operating portion of the switch element are rotated together to reliably transmit the rotation of the operation knob to the operating portion even if the vehicle switch is a rotary switch. On the other hand, if a pressing load is exerted to the vehicle switch, the projecting amount of the vehicle switch decreases as the outer part and the operation knob move backward due to the breakage of the breakable part. This enables the absorption of an impact to a passenger or the like while ensuring the operability of the rotary switch.

In the above vehicle switch, the base preferably includes a guiding portion engaged with the inner part of the holder to guide the holder in a rotating direction thereof. Such a construction stabilizes the rotations of the holder and the operation knob to improve operability.

## Claims

1. A vehicle switch installed on a circuit board provided at a back side of a vehicle panel mounted in a vehicle, comprising:
a switch element provided on the circuit board and projecting toward a front side of the vehicle panel,
a base provided on the circuit board and surrounding the switch element,
a holder covering the base and the switch element from the front side of the vehicle panel and connected with the switch element to operate together with the switch element, and
an operation knob supported at the front side of the holder and operating together with the holder by being connected with the holder,
wherein:
the holder includes an inner part connected with the switch element and held in contact with the base, an outer part provided around the inner part and connected with the operation knob and a breakable part provided between the inner part and the outer part to connect the inner part and the outer part,
the breakable part is so shaped as to be broken by a shear force acting between a part of the inner part in contact with the base and the outer part of the holder when a pressing load of a specified value or higher is exerted to the operation knob, and
the operation knob connected with the outer part of the holder moves backward in a direction toward the back side of the vehicle panel when the breakable part is broken.

2. A vehicle switch according to claim 1, wherein the outer part, the inner part and the breakable part of the holder are all formed integral to each other.

3. A vehicle switch according to claim 1 or 2, wherein the breakable part is shaped to be thinner than the inner part and the outer part of the holder.

4. A vehicle switch according to any one of claims 1 to 3, wherein:
the breakable part includes a plurality of connecting portions circumferentially arranged at specified intervals, and
the outer part and the inner part of the holder are connected only by these connecting portions.

5. A vehicle switch according to any one of claims 1 to 4, wherein:
the vehicle switch is a rotary switch,
the switch element includes a main portion fixed to the circuit board and an operating portion rotatable relative to the main portion about an axis in a normal direction of the circuit board,
the inner part of the holder is connected with the operating portion, and
the inner part and the outer part of the holder and the operating portion are rotated together as the operation knob is rotated.

6. A vehicle switch according to claim 5, wherein the base includes a guiding portion engaged with the inner part of the holder to guide the holder in a rotating direction thereof.
